# EUROPÄISCHE PATENTANMELDUNG

(11) **EP 3 247 031 A1**
(43) Veröffentlichungstag der Anmeldung: **22.11.2017**
(21) Anmeldenummer: 16169940.0
(22) Anmeldetag: 17.05.2016
(51) Int. Cl.: H02M 5/27, H02J 3/34

(54) **ANLAGE UND VERFAHREN ZUM ERZEUGEN EINER DREIPHASENWECHSELSPANNUNG**

(71) Anmelder: Siemens Aktiengesellschaft, 80333 München (DE)
(72) Erfinder: Jäkel, Christian, 47169 Duisburg (DE); Klocke, Meinolf, 58452 Witten (DE); Lehmann, Christoph, 47506 Neukirchen-Vluyn (DE); Pieczyk, Marian-Peter, 45476 Mülheim a.d. Ruhr (DE); Romanowski, Holger, 47055 Duisburg (DE); Schmahl, Milan, 45479 Mülheim an der Ruhr (DE)

(57) **Zusammenfassung**

Die Erfindung betrifft eine Anlage zum Erzeugen einer Dreiphasenwechselspannung, aufweisend wenigstens eine Gasturbine, wenigstens einen mit der Gasturbine angetriebenen Generator, wenigstens einen geregelten Direktumrichter, mit dem eine von dem Generator erzeugte erste Dreiphasenwechselspannung mit einer ersten Frequenz in eine zweite Dreiphasenwechselspannung mit einer zweiten Frequenz, die höher als die erste Frequenz ist, umwandelbar ist, und wenigstens einen Frequenzfilter, mit dem in der zweiten Dreiphasenwechselspannung vorhandene Oberschwingungen aus der zweiten Dreiphasenwechselspannung herausfilterbar sind, wobei der Frequenzfilter zumindest mittelbar mit einem Stromnetz verbindbar ist, dessen Netzfrequenz höher als die erste Frequenz ist.

## Beschreibung

Die Erfindung betrifft eine Anlage zum Erzeugen einer Dreiphasenwechselspannung, aufweisend wenigstens eine Gasturbine und wenigstens einen mit der Gasturbine angetriebenen Generator.

Des Weiteren betrifft die Erfindung ein Verfahren zum Erzeugen einer Dreiphasenwechselspannung mit wenigstens einer Gasturbine und wenigstens einem mit der Gasturbine angetriebenen Generator, wobei der angetriebene Generator eine erste Dreiphasenwechselspannung mit einer ersten Frequenz erzeugt.

Anlagen zum Erzeugen einer Dreiphasenwechselspannung und zum Versorgen eines Stromnetzes mit der Dreiphasenwechselspannung sind hinlänglich bekannt und werden in Kraftwerken eingesetzt. Eine solche Anlage kann wenigstens eine Gasturbine, beispielsweise eine Gasturbine eines Gas-und-Dampfturbinen-Kraftwerks (GuD) oder eines Gasturbinen-Kraftwerks, und wenigstens einen mit der Gasturbine angetriebenen Generator, insbesondere Turbogenerator, aufweisen.

Ein Turbinenläufer der Gasturbine ist herkömmlich starr bzw. drehfest mit einem Generatorläufer des Generators verbunden. Um durch eine Rotation des Turbinenläufers eine Dreiphasenwechselspannung mit einer üblichen Netzfrequenz in Höhe von 50 Hz oder 60 Hz mit dem Generator erzeugen und in das Stromnetz einspeisen zu können, muss der Turbinenläufer herkömmlich mit einer Frequenz in Höhe von 50 Hz bzw. 60 Hz rotieren.

Da die Leistung und der Wirkungsgrad von Gasturbinen mit einer Betriebsfrequenz von 50 Hz (50Hz-Gasturbinen) größer sind als bei entsprechenden 60Hz-Gasturbinen, besteht ein Interesse daran, 50Hz-Gasturbinen auch zur Versorgung von Stromnetzen mit einer Netzfrequenz von 60 Hz (60Hz-Stromnetzen) einzusetzen.

Eine Aufgabe der Erfindung ist es, die Einsetzbarkeit von Gasturbinen, deren Betriebsfrequenz kleiner als die Netzfrequenz eines Stromnetzes ist, zum Versorgen des Stromnetzes mit elektrischen Energie zu ermöglichen.

Eine erfindungsgemäße Anlage zum Erzeugen einer Dreiphasenwechselspannung umfasst wenigstens eine Gasturbine, wenigstens einen mit der Gasturbine angetriebenen Generator, wenigstens einen geregelten Direktumrichter, mit dem eine von dem Generator erzeugte erste Dreiphasenwechselspannung mit einer ersten Frequenz in eine zweite Dreiphasenwechselspannung mit einer zweiten Frequenz, die höher als die erste Frequenz ist, umwandelbar ist, und wenigstens einen Frequenzfilter, mit dem in der zweiten Dreiphasenwechselspannung vorhandene Oberschwingungen aus der zweiten Dreiphasenwechselspannung herausfilterbar sind, wobei der Frequenzfilter zumindest mittelbar mit einem Stromnetz verbindbar ist, dessen Netzfrequenz höher als die erste Frequenz ist.

Gemäß der Erfindung kann eine von dem Generator, insbesondere Turbogenerator, erzeugte Dreiphasenwechselspannung mit einer niedrigeren ersten Frequenz in eine zweite Dreiphasenwechselspannung mit einer höheren Frequenz umgewandelt werden. Dies macht es möglich, beispielsweise eine 50Hz-Gasturbine, deren Turbinenläufer starr bzw. drehfest mit einem Generatorläufer des Generators mit einer Betriebsfrequenz in Höhe von 50 Hz (50Hz-Generator) verbunden ist, zum Versorgen eines 60Hz-Stromnetzes einzusetzen. Die in diesem Fall aus dem 50Hz-Generator, dem geregelten 60Hz-Direktumrichter und dem 60Hz-Frequenzfilter gebildete Anordnung kann somit erfindungsgemäß von einer 50Hz-Gasturbine angetrieben werden und eine Dreiphasenwechselspannung mit einer Frequenz in Höhe von 60 Hz in ein 60Hz-Drehstromnetz einspeisen. Der geregelte 60Hz-Direktumrichter wandelt hierbei die am Eingang des 60Hz-Direktumrichters anliegende erste Dreiphasenwechselspannung, hier eine 50Hz-Dreiphasenwechselspannung, in eine zweite Dreiphasenwechselspannung, hier eine 60Hz-Dreiphasenwechselspannung, an seinem Ausgang um. Durch diese Umwandlung bzw. Umrichtung wird eine 60Hz-Dreiphasenwechselspannung mit drei Phasenspannungen erzeugt, deren jeweiliger Spannungsverlauf einen sehr hohen Oberschwingungsgehalt aufweist. Um diese Oberschwingungen in den Spannungsverläufen zu reduzieren, ist der 60Hz-Frequenzfilter vorhanden. Folglich kann mit der Erfindung eine 50Hz-Gasturbine zur Einspeisung einer 60Hz-Dreiphasenwechselspannung in ein 60Hz-Stromnetz eingesetzt werden.

Die Leistung und der Wirkungsgrad einer erfindungsgemäßen Anlage sind gegenüber einer herkömmlichen 60Hz-Gasturbineneinheit erheblich höher. Da beispielsweise die Leistung der größten 50Hz-Gasturbine um 44 % größer ist als die Leistung der größten 60Hz-Gasturbine, können größere 60Hz-Kraftwerke mit weniger Blöcken aufgebaut werden. Beispielsweise können durch die Erfindung Kraftwerke, die bislang mit drei 60Hz-Gasturbinen-GuD-Strängen realisiert worden sind, mit zwei 50Hz-Gasturbinen-GuD-Strängen realisiert werden. Dadurch entfällt ein ganzer GuD-Strang bestehend aus einer Gasturbine, zwei Generatoren (Mehrwellenanlage), einem Kessel, einer Dampfturbine und einer Leittechnik, was zu einer enormen Kostenersparnis führt.

Bevorzugt umfasst der Generator einen Stator mit wenigstens einer Statorwicklung, die als ungesehnte Zweischichtwicklung ausgebildet ist. Durch die Ausbildung der Statorwicklung als ungesehnte Zweischichtwicklung ist mit dem Generator eine höhere Spannung erzeugbar, was mit einer Erhöhung des Wirkungsgrads des Generators einhergeht. Ein solcher hocheffizienter Generator kann bis auf die Ständerwicklung wie ein herkömmlicher Generator ausgestaltet sein.

Die Anlage umfasst bevorzugt wenigstens eine Spannungserfassungseinheit, mit der momentane Ist-Phasenspannungen der einzelnen Phasen der ersten Dreiphasenwechselspannung erfassbar sind, wenigstens eine ansteuerbare Schalteinheit, über die jeweils eine der Phasen der ersten Dreiphasenwechselspannung wahlweise mit jeweils einer der Phasen der zweiten Dreiphasenwechselspannung verbindbar ist, und wenigstens eine signaltechnisch mit der Spannungserfassungseinheit und der Schalteinheit verbundene Steuer- und/oder Regeleinheit, die eingerichtet ist, in vorgegebenen Zeitabständen die Ist-Phasenspannungen mit jeweils einer vorgegebenen Soll-Phasenspannung einer Soll-Dreiphasenwechselspannung zu vergleichen und in Abhängigkeit eines Ergebnisses des Vergleichs die Schalteinheit derart anzusteuern, dass die Schalteinheit die Phase derjenigen Ist-Phasenspannung, die sich am wenigstens von der jeweiligen vorgegebenen Soll-Phasenspannung unterscheidet, mit einem der jeweiligen vorgegebenen Soll-Phasenspannung zugeordneten Phasenausgang der Schalteinheit verbindet. Die Spannungserfassungseinheit, die Schalteinheit und die Steuer- und/oder Regeleinheit können Bestandteile des geregelten Direktumrichters sein. Mit der Spannungserfassungseinheit werden am Eingang des Direktumrichters anliegende Ist-Phasenspannungen, beispielsweise 50Hz-Ist-Phasenspannungen, gemessen. Hierzu kann die Spannungserfassungseinheit für jede Phase bzw. Ist-Phasenspannung einen Messwandler bzw. Spannungswandler aufweisen. Die Steuerung und/oder Regelung der Schalteinheit mittels der Steuer- und/oder Regeleinheit basiert auf in vorgegebenen Zeitabständen, insbesondere in äquidistanten Zeitabständen, durchgeführten Vergleichen der Ist-Phasenspannungen mit den einzelnen Soll-Phasenspannungen. Ein entsprechender Vergleich wird also für jede von drei Soll-Phasenspannungen durchgeführt. Die Schalteinheit umfasst drei Phasenausgänge, die jeweils einer Soll-Phasenspannung zugeordnet sind, und umgekehrt.

Die Anlage umfasst bevorzugt wenigstens eine signaltechnisch mit der Steuer- und/oder Regeleinheit verbundene Sollwertgebereinheit, mit der die Soll-Phasenspannungen erzeugbar sind. Die Sollwertgebereinheit kann ein Bestandteil des geregelten Direktumrichters sein. Die Sollwertgebereinheit, beispielsweise 60Hz-Sollwertgebereinheit kann ein elektronischer Generator sein, der eine Dreiphasenwechselspannung, beispielsweise 60Hz-Dreiphasenwechselspannung, mit sinusförmigen Soll-Phasenspannungen mit definierten Amplituden erzeugt.

Bevorzugt umfasst die Sollwertgebereinheit wenigstens eine Oszillatoreinheit, mit der eine Wechselspannung mit der zweiten Frequenz erzeugbar ist, wenigstens zwei mit einem Ausgang der Oszillatoreinheit verbundene, in Reihe zueinander geschaltete Phasenschiebereinheiten, mit denen eine weitere Dreiphasenwechselspannung aus der Wechselspannung erzeugbar ist, und wenigstens eine Verstärkereinheit pro Phase der weiteren Dreiphasenwechselspannung, wobei die Verstärkereinheiten signaltechnisch mit der Steuer- und/oder Regeleinheit verbunden sind. Die Oszillatoreinheit kann einen Wien-Robinson-Oszillator aufweisen. Die Phasenschieber können jeweils als RL-Glied ausgebildet sein.

Die Oszillatoreinheit ist bevorzugt mit einer Dreiphasenwechselspannung des Stromnetzes synchronisierbar. Hierdurch wird die von der Sollwertgebereinheit erzeugte Soll-Dreiphasenwechselspannung und somit die zweite Dreiphasenwechselspannung mit der Dreiphasenwechselspannung des Stromnetzes synchronisiert.

Die Steuer- und/oder Regeleinheit ist bevorzugt derart mit dem Stromnetz verbindbar, dass der Steuer- und/oder Regeleinheit momentane Phasenspannungen einer Dreiphasenwechselspannung des Stromnetzes als Soll-Phasenspannungen zuführbar sind. Dies kann alternativ zur der Versorgung der Steuer- und/oder Regeleinheit mit Soll-Phasenspannungen eines Sollwertgebers vorgesehen sein. Auch hierdurch wird die zweite Dreiphasenwechselspannung mit der Dreiphasenwechselspannung des Stromnetzes synchronisiert.

Die Schalteinheit umfasst bevorzugt pro Phase der zweiten Dreiphasenwechselspannung drei Thyristoreinheiten, wobei die jeweilige Phase der zweiten Dreiphasenwechselspannung über eine der drei ihr zugeordneten Thyristoreinheiten mit einer der Phasen der ersten Dreiphasenwechselspannung verbindbar ist, und wobei jede Thyristoreinheit wenigstens zwei antiparallel zueinander geschaltete Thyristoren aufweist. Je nach Höhe der erzeugten ersten Dreiphasenwechselspannung können dabei ein oder mehrere Thyristoren in Reihe geschaltet sein. Die einzelnen Thyristoren sind mittels der Steuer- und/oder Regeleinheit ansteuerbar.

Die Steuerung und/oder Regelung der Schalteinheit mittels der Steuer- und/oder Regeleinheit wird am Beispiel einer Phase 1 der zweiten Dreiphasenwechselspannung erläutert. Zum Zeitpunkt t0 liegen als Ist-Phasenspannungen beispielsweise die Spannungen u₅₀1(t0), u₅₀2(t0) und u₅₀3(t0), also Spannungen mit einer ersten Frequenz in Höhe von 50 Hz, am Eingang bzw. an Phaseneingängen des Direktumrichters bzw. der Schalteinheit an und als Soll-Phasenspannung die Spannung u₆₀1(t0) vor, also eine Spannung mit einer zweiten Frequenz in Höhe von 60 Hz, einer Phase 1 der der Steuer- und/oder Regeleinheit zugeführten Soll-Dreiphasenwechselspannung. Dann wird über einen Vergleich ermittelt, welche der Spannungen u₅₀1(t0), u₅₀2(t0) und u₅₀3(t0) der Spannung u₆₀1(t0) am nächsten liegt bzw. sich am wenigstens von der Spannung u₆₀1(t0) unterscheidet. Diese Ermittlung kann beispielsweise durch Differenzbildung zwischen der jeweiligen Spannung u₅₀1(t0), u₅₀2(t0) oder u₅₀3(t0) mit der Spannung u₆₀1(t0) und einer anschließenden Feststellung des minimalen Wertes der Spannungsdifferenzen erfolgen. Anschließend erhält der Thyristor derjenigen 50Hz-Phase der ersten Dreiphasenwechselspannung, deren Ist-Phasenspannung am wenigsten von der Soll-Phasen-spannung abweicht, mittels der Steuer- und/oder Regeleinheit einen Ansteuerimpuls, wodurch dieser Thyristor die betreffende 50Hz-Phase auf einen der Phase 1 zugeordneten Phasenausgang der Schalteinheit schaltet. Dabei wird immer derjenige Thyristor der jeweiligen Thyristoreinheit angesteuert, der sich in der betreffenden Phase in Durchlassrichtung befindet. Damit kann jetzt Strom vom jeweiligen 50Hz-Eingang des Direktumrichters in die Phase 1 der zweiten 60Hz-Dreiphasenwechselspannung fließen.

Zum Zeitpunkt t0+Δt wird der oben beschriebene Vergleich der dann momentan gegebenen Ist-Phasenspannungen mit der jeweiligen dann momentan gegebenen Soll-Phasenspannung erneut durchgeführt, wobei wieder diejenige 50Hz-Phase ermittelt wird, deren momentane Ist-Phasenspannung zu diesem Zeitpunkt der momentanen Soll-Phasenspannung am nächsten kommt, wonach der betreffende Thyristor in Abhängigkeit der Durchlassrichtung eingeschalten wird.

Sollte letztere 50Hz-Phase dieselbe 50Hz-Phase wie zum Zeitpunkt t0 sein, ändert sich nichts, d.h. der Strom fließt weiter in dieser 50Hz-Phase. Sollte aber zum Zeitpunkt t0+Δt eine andere 50Hz-Phase über den Vergleich ermittelt worden sein, wird der Strom von der zum Zeitpunkt t0 ermittelten 50Hz-Phase auf die zum Zeitpunkt t0+Δt ermittelte 50Hz-Phase kommutieren. Kommutieren bedeutet hierbei, dass der zum Zeitpunkt t0+Δt fließende Strom in der 50Hz-Phase y nun den in der 50Hz-Phase x fließenden Strom zum Erlöschen bringt.

Die beschriebene Vorgehensweise wird entsprechend für die Phasen 2 und 3 der zweiten 60Hz-Dreiphasenwechselspannung durchgeführt. Das Ergebnis dieser Umwandlung bzw. Umrichtung ist also ein 60Hz-Spannungsverlauf, der aus Δt langen Zeitabschnitten mit zum Teil sehr unterschiedlichen Spannungsamplituden besteht. Dies führt zu einem sehr hohen Oberschwingungsgehalt der 60Hz-Phasenspannungen der zweiten Dreiphasenwechselspannung, der durch den 60Hz-Frequenzfilter reduziert wird.

Der Frequenzfilter umfasst pro Phase der zweiten Dreiphasenwechselspannung wenigstens einen Reihenschwingkreis. Die drei Reihenschwingkreise können beispielsweise jeweils auf eine 60Hz-Phasenspannung abgestimmt sein. Jeder Reihenschwingkreis soll eine hohe Güte haben. Dies führt dazu, dass die Spannungsanteile der jeweiligen Phasenspannung, insbesondere 60Hz-Phasenspannung, fast ohne Spannungsverlust den jeweiligen Reihenschwingkreis passieren können, wogegen alle von 60Hz verschiedenen Spannungsoberschwingungen einen sehr hohen Spannungsverlust erfahren.

Die Anlage umfasst bevorzugt wenigstens einen Maschinentransformator, über den der Frequenzfilter mit dem Stromnetz verbindbar ist. Der Maschinentransformator wirkt als Tiefpassfilter, so dass zusätzlich sichergestellt ist, dass die an Netzklemmen, über die der Maschinentransformator mit dem Stromnetz verbindbar bzw. verbunden ist, anliegenden Phasenspannungen jeweils nahezu sinusförmig sind.

Nach einem erfindungsgemäßen Verfahren zum Erzeugen einer Dreiphasenwechselspannung mit wenigstens einer Gasturbine und wenigstens einem mit der Gasturbine angetriebenen Generator erzeugt der angetriebene Generator eine erste Dreiphasenwechselspannung mit einer ersten Frequenz, wobei die erste Dreiphasenwechselspannung mit der ersten Frequenz in eine zweite Dreiphasenwechselspannung mit einer zweiten Frequenz, die höher als die erste Frequenz ist, umgewandelt wird, und wobei in der zweiten Dreiphasenwechselspannung vorhandene Oberschwingungen aus der zweiten Dreiphasenwechselspannung herausgefiltert werden.

Mit dem Verfahren sind die oben mit Bezug auf die Anlage genannten Vorteile entsprechend verbunden. Insbesondere kann die Anlage gemäß einer ihrer Ausgestaltungen oder einer beliebigen Kombination von wenigstens zwei dieser Ausgestaltungen zur Durchführung des Verfahrens verwendet werden. Insofern können vorteilhafte Ausgestaltungen der Anlage vorteilhafte Ausgestaltungen des Verfahrens sein, auch wenn hierauf im Folgenden nicht explizit hingewiesen wird.

Bevorzugt werden momentane Ist-Phasenspannungen der einzelnen Phasen der ersten Dreiphasenwechselspannung erfasst, wobei in vorgegebenen Zeitabständen die Ist-Phasenspannungen wahlweise mit jeweils einer vorgegebenen Soll-Phasenspannung einer Soll-Dreiphasenwechselspannung verglichen werden, und wobei in Abhängigkeit eines Ergebnisses des Vergleichs die Phase derjenigen Ist-Phasenspannung, die sich am wenigstens von der jeweiligen vorgegebenen Soll-Phasenspannung unterscheidet, zur Ausbildung einer der jeweiligen vorgegebenen Soll-Phasenspannung zugeordneten Phasenspannung der zweiten Dreiphasenwechselspannung verwendet wird. Mit dieser Ausgestaltung sind die oben mit Bezug auf die entsprechende Ausgestaltung des Verfahrens genannten Vorteile entsprechend verbunden.

Die Soll-Phasenspannungen werden bevorzugt mit wenigstens einer Sollwertgebereinheit erzeugt oder Phasenspannungen einer Dreiphasenwechselspannung eines Stromnetzes werden als Soll-Phasenspannungen verwendet. Mit diesen alternativen Ausgestaltungen sind die oben mit Bezug auf die entsprechenden Ausgestaltungen des Verfahrens genannten Vorteile entsprechend verbunden.

Die Sollwertgebereinheit wird bevorzugt mit einer Dreiphasenwechselspannung des Stromnetzes synchronisiert. Mit dieser Ausgestaltung sind die oben mit Bezug auf die entsprechende Ausgestaltung des Verfahrens genannten Vorteile entsprechend verbunden.

Im Folgenden wird die Erfindung unter Bezugnahme auf die anliegenden Figuren anhand bevorzugter Ausführungsformen beispielhaft erläutert, wobei die nachfolgend dargestellten Merkmale sowohl jeweils für sich genommen, als auch in unterschiedlicher Kombination miteinander einen Aspekt der Erfindung darstellen können. Es zeigen:
- Fig. 1: eine schematische Darstellung eines Ausführungsbeispiels für eine erfindungsgemäße Anlage;
- Fig. 2: einen Schaltplan einer Schalteinheit eines Ausführungsbeispiels für eine erfindungsgemäße Anlage;
- Fig. 3: einen Schaltplan einer Spannungserfassungseinheit eines Ausführungsbeispiels für eine erfindungsgemäße Anlage;
- Fig. 4: einen Schaltplan einer Sollwertgebereinheit eines Ausführungsbeispiels für eine erfindungsgemäße Anlage;
- Fig. 5: eine schematische Darstellung einer Steuerung und/oder Regelung einer Schalteinheit eines Ausführungsbeispiels für eine erfindungsgemäße Anlage;
- Fig. 6: eine Darstellung von beispielhaften Spannungsverläufen von Ist-Phasenspannungen einer ersten Dreiphasenwechselspannung, einer Soll-Phasenspannung und einer Phasenspannung einer ungefilterten zweiten Dreiphasenwechselspannung; und
- Fig. 7: eine schematische Darstellung eines Ausführungsbeispiels für eine erfindungsgemäße Anlage.

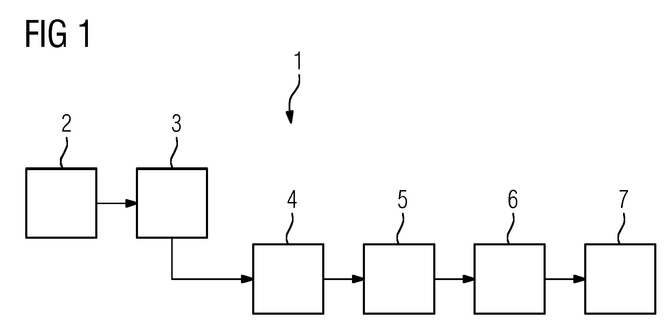

Fig. 1 zeigt eine schematische Darstellung eines Ausführungsbeispiels für eine erfindungsgemäße Anlage 1 zum Erzeugen einer Dreiphasenwechselspannung.

Die Anlage 1 umfasst wenigstens eine 50Hz-Gasturbine 2 und einen mit der 50Hz-Gasturbine 2 angetriebenen 50HZ-Generator 3. Der 50Hz-Generator umfasst einen nicht gezeigten Stator mit wenigstens einer Statorwicklung, die als ungesehnte Zweischichtwicklung ausgebildet ist.

Des Weiteren umfasst die Anlage 1 einen elektrisch mit dem 50HZ-Generator 3 verbundenen, geregelten Direktumrichter 4, mit dem eine von dem 50Hz-Generator 3 erzeugte erste Dreiphasenwechselspannung mit einer ersten Frequenz in eine zweite Dreiphasenwechselspannung mit einer zweiten Frequenz, die höher als die erste Frequenz ist, umwandelbar ist.

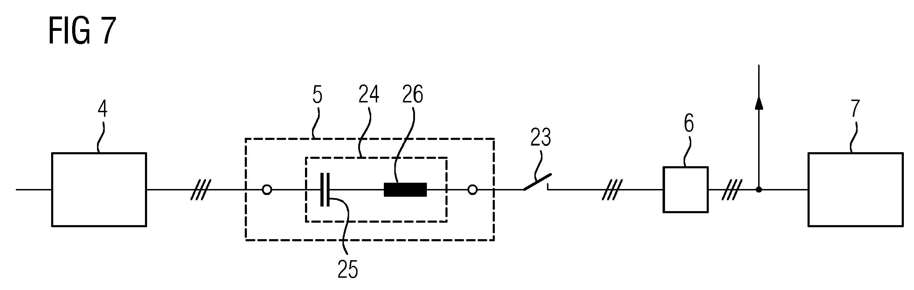

Zudem umfasst die Anlage 1 einen 60Hz-Frequenzfilter 5, mit dem in der zweiten Dreiphasenwechselspannung vorhandene Oberschwingungen aus der zweiten Dreiphasenwechselspannung herausfilterbar sind. Der 60Hz-Frequenzfilter 5 umfasst pro Phase der zweiten Dreiphasenwechselspannung einen nicht gezeigten Reihenschwingkreis, wie es beispielsweise in Fig. 7 gezeigt ist.

Zusätzlich umfasst die Anlage 1 einen Maschinentransformator 6, über den der 60Hz-Frequenzfilter 5 mit einem 60Hz-Stromnetz 7 verbunden ist, dessen Netzfrequenz höher als die erste Frequenz ist. Folglich ist der 60Hz-Frequenzfilter 5 mittelbar mit dem 60Hz-Stromnetz 7 verbunden.

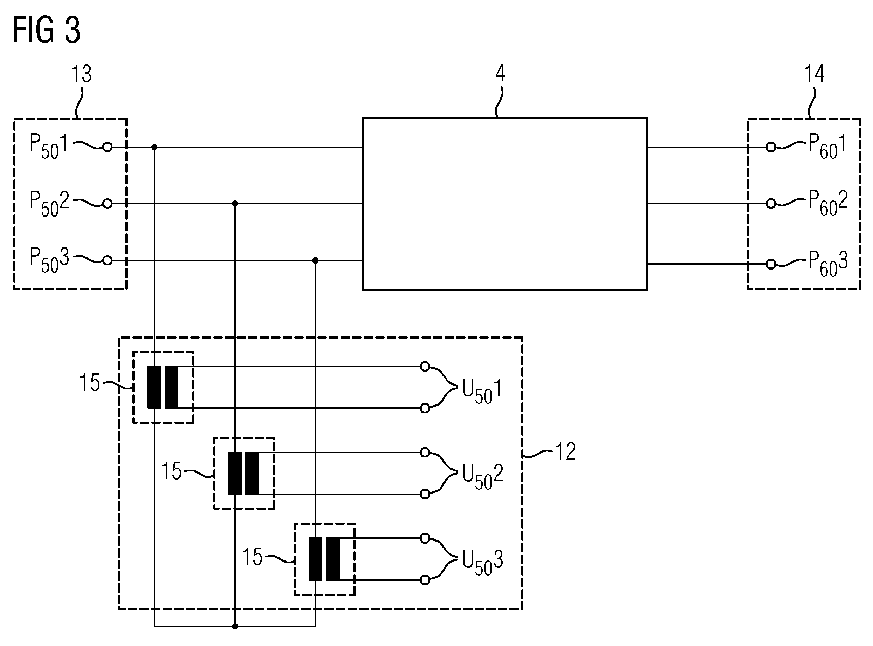

Die Anlage 1 umfasst des Weiteren eine nicht gezeigte 50Hz-Spannungserfassungseinheit, mit der momentane Ist-Phasenspannungen der einzelnen Phasen der ersten Dreiphasenwechselspannung erfassbar sind. Die 50HZ-Spannungserfassungseinheit kann entsprechend Fig. 3 ausgebildet und ein Bauteil des geregelten Direktumrichters 4 sein.

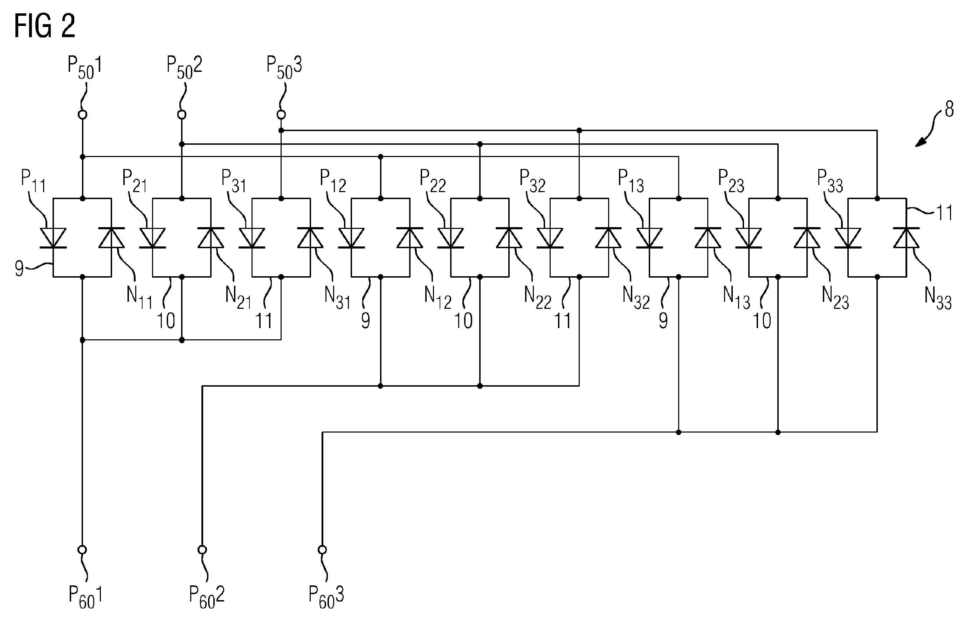

Zudem umfasst die Anlage 1 eine nicht gezeigte, ansteuerbare Schalteinheit, über die jeweils eine der Phasen der ersten Dreiphasenwechselspannung wahlweise mit jeweils einer der Phasen der zweiten Dreiphasenwechselspannung verbindbar ist. Die Schalteinheit kann pro Phase der zweiten Dreiphasenwechselspannung drei nicht gezeigte Thyristoreinheiten aufweisen. Die jeweilige Phase der zweiten Dreiphasenwechselspannung kann über eine der drei ihr zugeordneten Thyristoreinheiten mit einer der Phasen der ersten Dreiphasenwechselspannung verbindbar sein. Jede Thyristoreinheit kann wenigstens zwei antiparallel zueinander geschaltete, nicht gezeigte Thyristoren aufweisen. Die ansteuerbare Schalteinheit kann entsprechend Fig. 2 ausgebildet und ein Bauteil des geregelten Direktumrichters 4 sein.

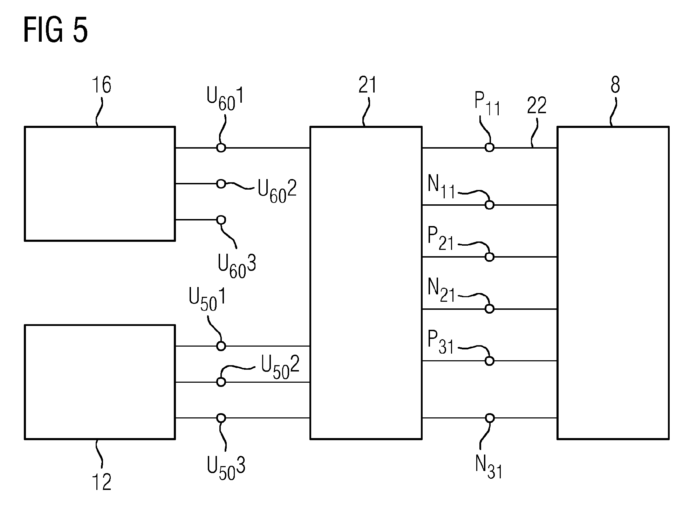

Des Weiteren umfasst die Anlage 1 eine signaltechnisch mit der Spannungserfassungseinheit und der Schalteinheit verbundene, nicht gezeigte Steuer- und/oder Regeleinheit, die eingerichtet ist, in vorgegebenen Zeitabständen die Ist-Phasenspannungen wahlweise mit jeweils einer vorgegebenen Soll-Phasenspannung einer Soll-Dreiphasenwechselspannung zu vergleichen und in Abhängigkeit eines Ergebnisses des Vergleichs die Schalteinheit derart anzusteuern, dass die Schalteinheit die Phase derjenigen Ist-Phasenspannung, die sich am wenigstens von der jeweiligen vorgegebenen Soll-Phasenspannung unterscheidet, mit einem der jeweiligen vorgegebenen Soll-Phasenspannung zugeordneten, nicht gezeigten Phasenausgang der Schalteinheit verbindet. Die Steuer- und/oder Regeleinheit kann entsprechend Fig. 5 ausgebildet und ein Bauteil des geregelten Direktumrichters 4 sein.

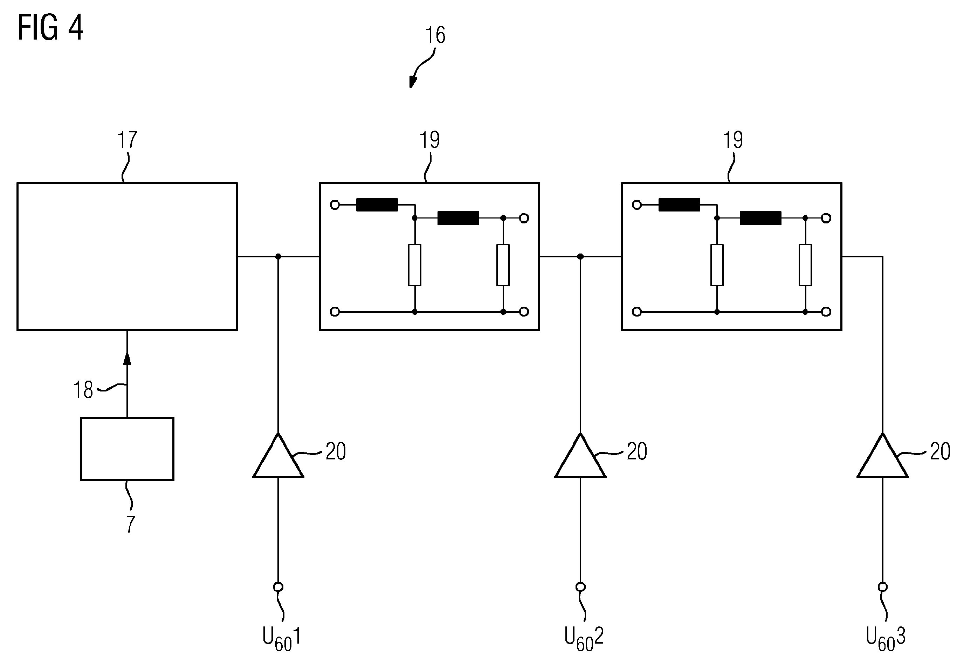

Die Anlage 1 kann zusätzlich eine signaltechnisch mit der Steuer- und/oder Regeleinheit verbundene, nicht gezeigte Sollwertgebereinheit aufweisen, mit der die Soll-Phasenspannungen erzeugbar sind. Die Sollwertgebereinheit kann beispielsweise entsprechend Fig. 4 ausgebildet und ein Bauteil des geregelten Direktumrichters 4 sein. Alternativ kann die Steuer- und/oder Regeleinheit derart mit dem 60Hz-Stromnetz 7 verbindbar sein, dass der Steuer- und/oder Regeleinheit momentane Phasenspannungen einer 60HZ-Dreiphasenwechselspannung des 60Hz-Stromnetzes als Soll-Phasenspannungen zuführbar sind.

Die Sollwertgebereinheit kann wenigstens eine nicht gezeigte Oszillatoreinheit aufweisen, mit der eine Wechselspannung mit der zweiten Frequenz erzeugbar ist. Zudem kann die Sollwertgebereinheit wenigstens zwei mit einem Ausgang der Oszillatoreinheit verbundene, in Reihe zueinander geschaltete, nicht gezeigte Phasenschiebereinheiten aufweisen, mit denen eine weitere Dreiphasenwechselspannung aus der Wechselspannung erzeugbar ist. Zudem kann die Sollwertgebereinheit wenigstens eine nicht gezeigte Verstärkereinheit pro Phase der weiteren Dreiphasenwechselspannung aufweisen, wobei die Verstärkereinheiten signaltechnisch mit der Steuer- und/oder Regeleinheit verbindbar sind. Die Oszillatoreinheit kann einen nicht gezeigten Wien-Robinson-Oszillator aufweisen. Die Oszillatoreinheit kann mit einer Dreiphasenwechselspannung des 60Hz-Stromnetzes 7 synchronisierbar sein.

Fig. 2 zeigt einen Schaltplan einer Schalteinheit 8 eines Ausführungsbeispiels für eine erfindungsgemäße Anlage, die nicht weitergehender in Fig. 2 gezeigt ist.

Die Schalteinheit 8 umfasst pro Phaseneingang bzw. 60Hz-Phase P₆₀1, P₆₀2 bzw. P₆₀3 der zweiten 60Hz-Dreiphasenwechselspannung drei Thyristoreinheiten 9 bis 11, wobei die 60Hz-Phasen P₆₀1, P₆₀2 und P₆₀3 einen 60Hz-Ausgang des nicht weitergehender gezeigten Direktumrichters ausbilden können. Die jeweilige 60Hz-Phase P₆₀1, P₆₀2 bzw. P₆₀3 ist über eine der drei ihr zugeordneten Thyristoreinheiten 9 bis 11 mit einer der 50Hz-Phasen P₅₀1, P₅₀2 bzw. P₅₀3 der ersten Dreiphasenwechselspannung verbindbar. Jede Thyristoreinheit 9, 10 bzw. 11 umfasst zwei antiparallel zueinander geschaltete Thyristoren (P11, N11), (P21, N21), (P31, N31), (P12, N12), (P22, N22), (P32, N32), (P13, N13), (P23, N23), (P33, N33), die mittels der nicht gezeigten Steuer- und/oder Regeleinheit ansteuerbar sind. Die 50Hz-Phasen P₅₀1, P₅₀2 und P₅₀3 können einen 50Hz-Eingang des nicht weitergehender gezeigten Direktumrichters ausbilden.

Fig. 3 zeigt einen Schaltplan einer 50Hz-Spannungserfassungseinheit 12 eines Ausführungsbeispiels für eine erfindungsgemäße Anlage, die nicht weitergehender in Fig. 3 gezeigt ist.

Im oberen Bereich von Fig. 3 ist der geregelte 60Hz-Direktumrichter 4 mit seinem dreiphasigen 50Hz-Eingang 13 und seinem dreiphasigen 60Hz-Ausgang 14 gezeigt. Die 50Hz-Spannungserfassungseinheit 12 umfasst für jede 50Hz-Phase P₅₀1, P₅₀2 bzw. P₅₀3 einen Messwandler 15, mit denen die 50Hz-Ist-Phasenspannungen U₅₀1, U₅₀2 bzw. U₅₀3 erfassbar sind.

Fig. 4 zeigt einen Schaltplan für eine Sollwertgebereinheit 16 eines Ausführungsbeispiels für eine erfindungsgemäße Anlage, die nicht weitergehender in Fig. 4 gezeigt ist.

Die Sollwertgebereinheit 16 umfasst eine 60Hz-Oszillatoreinheit 17, mit der eine Wechselspannung mit der zweiten Frequenz erzeugbar ist. Die 60Hz-Oszillatoreinheit kann einen Wien-Robinson-Oszillator aufweisen. Die 60Hz-Oszillatoreinheit kann über die Verbindung 18 mit einer Dreiphasenwechselspannung des 60Hz-Stromnetzes synchronisiert werden.

Die Sollgebereinheit 16 umfasst des Weiteren zwei mit einem Ausgang der 60Hz-Oszillatoreinheit verbundene, in Reihe zueinander geschaltete Phasenschiebereinheiten 19, die jeweils als RL-Glied ausgebildet sind und mit denen eine weitere Dreiphasenwechselspannung aus der mit der Oszillatoreinheit 17 erzeugten Wechselspannung erzeugbar ist.

Ferner umfasst die Sollwertgebereinheit 16 eine Verstärkereinheit 20 pro Phase der weiteren Dreiphasenwechselspannung, wobei die Verstärkereinheiten 20 signaltechnisch mit der nicht gezeigten Steuer- und/oder Regeleinheit verbunden sind. Die Sollwertgebereinheit 16 erzeugt somit die 60Hz-Soll-Phasenspannungen U₆₀1, U₆₀2 und U₆₀3

Fig. 5 zeigt eine schematische Darstellung einer Steuerung und/oder Regelung einer Schalteinheit 8 eines Ausführungsbeispiels für eine erfindungsgemäße Anlage, die nicht weitergehender in Fig. 5 gezeigt ist.

Es sind die 60Hz-Sollwertgebereinheit 16, die 50Hz-Spannungserfassungseinheit 12 und die Steuer- und/oder Regeleinheit 21 gezeigt. Die Steuer- und/oder Regeleinheit 21 ist über Steuerleitungen 22 mit den nicht gezeigten Thyristoren der Schalteinheit 8 verbunden. In Fig. 5 sind lediglich diejenigen Steuerleitungen 22 gezeigt, über welche die Steuer- und/oder Regeleinheit 21 mit den Thyristoren P11, N11, P21, N21, P31 und N31 verbunden ist, wobei diese Steuerleitungen 22 entsprechend gekennzeichnet sind.

Die Steuerung und/oder Regelung der Thyristoren basiert auf einem in zeitlich äquidistanten Abschnitten Δt durchgeführten Vergleich der 60Hz-Soll-Phasenspannungen U₆₀1, U₆₀2 und U₆₀3 mit den 50Hz-Ist-Phasenspannungen U₅₀1, U₅₀2 und U₅₀3. Dies wird in Fig. 5 am Beispiel der Phase 1 der von der Sollwertgebereinheit 16 erzeugten Soll-Dreiphasenwechselspannung erläutert.

Zu dem Zeitpunkt t0 liegen die 50Hz-Ist-Phasenspannungen U₅₀1, U₅₀2 und U₅₀3 und die 60Hz-Soll-Phasenspannung U₆₀1 der Phase 1 vor. Diese Spannungswerte werden der Steuer- und/oder Regeleinheit 21 zugeführt. Die Steuer- und/oder Regeleinheit 21 ermittelt, welche der 50Hz-Ist-Phasenspannungen U₅₀1, U₅₀2 und U₅₀3 der 60Hz-Soll-Phasenspannung U₆₀1 am nächsten liegt bzw. am sich am wenigsten von der 60Hz-Soll-Phasenspannung U₆₀1 unterscheidet. Diese Ermittlung kann beispielsweise durch Differenzbildung zwischen den 50Hz-Ist-Phasenspannungen U₅₀1, U₅₀2 und U₅₀3 und der 60Hz-Soll-Phasenspannung U₆₀1 erfolgen. Anschließend stellt die Steuer- und/oder Regeleinheit 21 anhand der jeweiligen Spannungsdifferenzen fest, welche der 50Hz-Ist-Phasenspannungen U₅₀1, U₅₀2 und U₅₀3 sich am wenigsten von der 60Hz-Soll-Phasenspannung U₆₀1 unterscheidet. Anschließend erhält der Thyristor derjenigen 50Hz-Phase, deren 50Hz-Ist-Phasenspannung der 60Hz-Soll-Phasenspannung U₆₀1 am nächsten liegt, einen Ansteuerimpuls von der Steuer-und/oder Regeleinheit 21, wodurch der Thyristor die betreffende 50Hz-Phase auf eine der Phase 1 zugeordnete Ausgangphase der Schalteinheit 8 schaltet. Dabei wird immer der Thyristor angesteuert, der sich in der betreffenden Phase in Durchlassrichtung befindet. Damit kann ein Strom vom 50Hz-Eingang des Direktumrichters in die Phase 1 des 60Hz-Ausgangs des Di-rektumrichters fließen.

Zum Zeitpunkt t0+Δt wird der oben beschriebene Vergleich der 50Hz-Ist-Phasenspannungen mit der 60Hz-Soll-Phasenspannung erneut durchgeführt und es wird wieder diejenige 50Hz-Phase ermittelt, deren 50Hz-Ist-Phasenspannung zu diesem Zeitpunkt der 60Hz-Soll-Phasenspannung am nächsten kommt. Dann wird der betreffende Thyristor in Abhängigkeit der Durchlassrichtung eingeschaltet. Sollte das dieselbe 50Hz-Phase wie zum Zeitpunkt t0 sein, ändert sich nichts, d.h. der Strom fließt weiter in dieser Phase. Sollte jedoch bei dem Vergleich eine andere Phase ermittelt worden sein, wird der Strom von der zum Zeitpunkt t0 ermittelten Phase auf die zum Zeitpunkt t0+Δt ermittelte Phase kommutieren. Kommutieren bedeutet hierbei, dass der zum Zeitpunkt t0+Δt fließende Strom in der Phase y nun den in der Phase x fließenden Strom zum Erlöschen bringt. Die beschriebene Vorgehensweise wird für die Phasen 2 und 3 der zweiten 60Hz-Dreiphasenwechselspannung entsprechend durchgeführt.

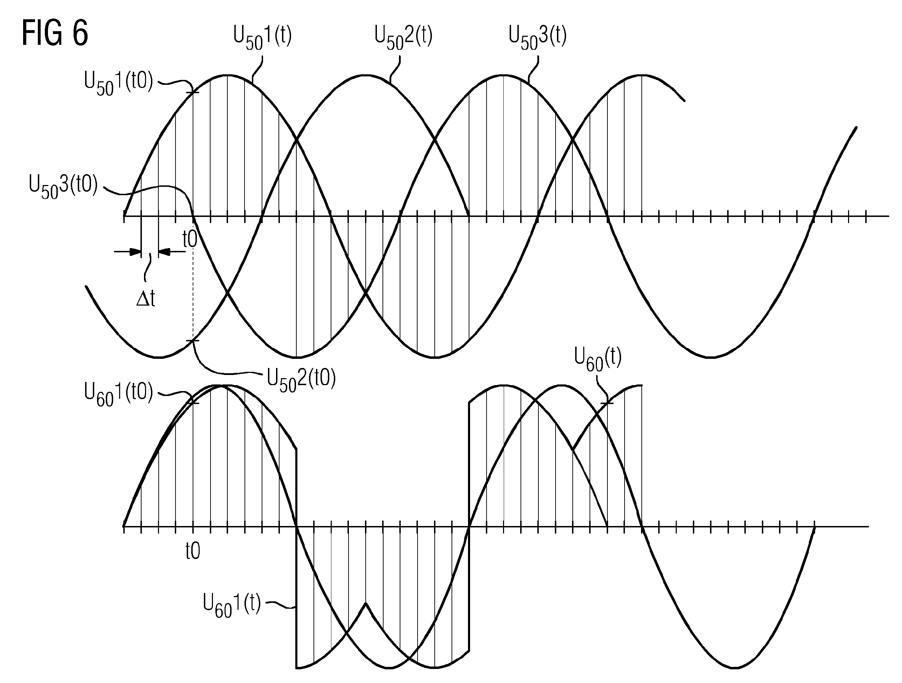

Fig. 6 zeigt eine Darstellung von beispielhaften Spannungsverläufen von 50Hz-Ist-Phasenspannungen U₅₀1(t) , U₅₀2(t) und U₅₀3(t) einer ersten Dreiphasenwechselspannung (oberer Bereich von Fig. 6), einer 60Hz-Soll-Phasenspannung U₆₀1(t) und einer Phasenspannung u₆₀(t) der Phase 1 einer ungefilterten zweiten Dreiphasenwechselspannung (unterer Bereich von Fig. 6). Diese Spannungsverläufe können sich durch die Anwendung der in Fig. 5 gezeigten Steuerung und/oder Regelung ergeben.

Fig. 7 zeigt eine schematische Darstellung eines Ausführungsbeispiels für eine erfindungsgemäße Anlage 1 zum Erzeugen einer Dreiphasenwechselspannung. Von der Anlage 1 sind lediglich der geregelte 60Hz-Direktumrichter 4, der 60Hz-Frequenzfilter 5 und der mit dem 60Hz-Stromnetz 7 verbundene Maschinentransformator 6 gezeigt. Des Weiteren ist lediglich eine Phase der zweiten 60Hz-Dreiphasenwechselspannung gezeigt. Im Übrigen kann die Anlage 1 gemäß wenigstens einer der Fign. 1 bis 5 ausgebildet sein.

Zwischen dem 60Hz-Frequenzfilter 5 und dem Maschinentransformator 6 ist ein Schalter 23 angeordnet, mit dem der 60Hz-Frequenzfilter 5 bei Bedarf von dem 60Hz-Stromnetz 7 trennbar ist. Der 60Hz-Frequenzfilter 5 umfasst für jede Phase einen Reihenschwingkreis 24 mit einer Kapazität 25 und einer dazu in Reihe geschalteten Induktivität 26.

Zwischen dem Maschinentransformator 6 und dem 60Hz-Stromnetz 7 zweigt die Verbindung 18 ab, über die der Oszillator der nicht gezeigten Sollwertgebereinheit synchronisierbar ist, wie es in Fig. 4 gezeigt ist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anlage (1) zum Erzeugen einer Dreiphasenwechselspannung, aufweisend wenigstens eine Gasturbine (2) und wenigstens einen mit der Gasturbine (2) angetriebenen Generator (3), **gekennzeichnet durch**
wenigstens einen geregelten Direktumrichter (4), mit dem eine von dem Generator (3) erzeugte erste Dreiphasenwechselspannung mit einer ersten Frequenz in eine zweite Dreiphasenwechselspannung mit einer zweiten Frequenz, die höher als die erste Frequenz ist, umwandelbar ist, und wenigstens einen Frequenzfilter (5), mit dem in der zweiten Dreiphasenwechselspannung vorhandene Oberschwingungen aus der zweiten Dreiphasenwechselspannung herausfilterbar sind, wobei der Frequenzfilter (5) zumindest mittelbar mit einem Stromnetz (7) verbindbar ist, dessen Netzfrequenz höher als die erste Frequenz ist.

2. Anlage (1) gemäß Anspruch 1,
wobei der Generator (3) einen Stator mit wenigstens einer Statorwicklung aufweist, die als ungesehnte Zweischichtwicklung ausgebildet ist.

3. Anlage (1) gemäß Anspruch 1 oder 2,
aufweisend
wenigstens eine Spannungserfassungseinheit (12), mit der momentane Ist-Phasenspannungen (U₅₀1, U₅₀2, U₅₀3) der einzelnen Phasen (P₅₀1, P₅₀2, P₅₀3) der ersten Dreiphasenwechselspannung erfassbar sind,
wenigstens eine ansteuerbare Schalteinheit (8), über die jeweils eine der Phasen (P₅₀1, P₅₀2, P₅₀3) der ersten Dreiphasenwechselspannung mit jeweils einer der Phasen (P₆₀1, P₆₀2, P₆₀3) der zweiten Dreiphasenwechselspannung verbindbar ist,
wenigstens eine signaltechnisch mit der Spannungserfassungseinheit (12) und der Schalteinheit (8) verbundene Steuer- und/oder Regeleinheit (21), die eingerichtet ist, in vorgegebenen Zeitabständen die Ist-Phasenspannungen (U₅₀1, U₅₀2, U₅₀3) wahlweise mit jeweils einer vorgegebenen Soll-Phasenspannung einer Soll-Dreiphasenwechselspannung (U₆₀1, U₆₀2, U₆₀3) zu vergleichen und
in Abhängigkeit eines Ergebnisses des Vergleichs die Schalteinheit (8) derart anzusteuern, dass die Schalteinheit (8) die Phase (P₅₀1, P₅₀2, P₅₀3) derjenigen Ist-Phasenspannung (U₅₀1, U₅₀2, U₅₀3), die sich am wenigstens von der jeweiligen vorgegebenen Soll-Phasenspannung (U₆₀1, U₆₀2, U₆₀3) unterscheidet, mit einem der jeweiligen vorgegebenen Soll-Phasen-spannung (U₆₀1, U₆₀2, U₆₀3) zugeordneten Phasenausgang (P₆₀1, P₆₀2, P₆₀3) der Schalteinheit (8) verbindet.

4. Anlage (1) gemäß Anspruch 3,
aufweisend wenigstens eine signaltechnisch mit der Steuer- und/oder Regeleinheit (21) verbundene Sollwertgebereinheit (16), mit der die Soll-Phasenspannungen (U₆₀1, U₆₀2, U₆₀3) erzeugbar sind.

5. Anlage (1) gemäß Anspruch 4,
wobei die Sollwertgebereinheit (16) wenigstens eine Oszillatoreinheit (17), mit der eine Wechselspannung mit der zweiten Frequenz erzeugbar ist,
wenigstens zwei mit einem Ausgang der Oszillatoreinheit (17) verbundene, in Reihe zueinander geschaltete Phasenschiebereinheiten (19), mit denen eine weitere Dreiphasenwechselspannung aus der Wechselspannung erzeugbar ist, und wenigstens eine Verstärkereinheit (20) pro Phase der weiteren Dreiphasenwechselspannung aufweist, wobei die Verstärkereinheiten (20) signaltechnisch mit der Steuer- und/oder Regeleinheit (21) verbunden sind.

6. Anlage (1) gemäß Anspruch 5,
wobei die Oszillatoreinheit (17) mit einer Dreiphasenwechselspannung des Stromnetzes (7) synchronisierbar ist.

7. Anlage (1) gemäß Anspruch 3,
wobei die Steuer- und/oder Regeleinheit (21) derart mit dem Stromnetz (7) verbindbar ist, dass der Steuer- und/oder Regeleinheit (21) momentane Phasenspannungen einer Dreiphasenwechselspannung des Stromnetzes (7) als Soll-Phasenspannungen zuführbar sind.

8. Anlage (1) gemäß einem der Ansprüche 3 bis 7,
wobei die Schalteinheit (8) pro Phase (P₆₀1, P₆₀2, P₆₀3) der zweiten Dreiphasenwechselspannung drei Thyristoreinheiten (9, 10, 11) aufweist,
wobei die jeweilige Phase (P₆₀1, P₆₀2, P₆₀3) der zweiten Dreiphasenwechselspannung über eine der drei ihr zugeordneten Thyristoreinheiten (9, 10, 11) mit einer der Phasen (P₅₀1, P₅₀2, P₅₀3) der ersten Dreiphasenwechselspannung verbindbar ist, und
wobei jede Thyristoreinheit (9, 10, 11) wenigstens zwei antiparallel zueinander geschaltete Thyristoren (Pᵢⱼ, Nᵢⱼ) aufweist.

9. Anlage (1) gemäß einem der Ansprüche 1 bis 8,
wobei der Frequenzfilter (5) pro Phase (P₆₀1, P₆₀2, P₆₀3) der zweiten Dreiphasenwechselspannung wenigstens einen Reihenschwingkreis (24) aufweist.

10. Anlage (1) gemäß einem der Ansprüche 1 bis 9,
aufweisend wenigstens einen Maschinentransformator (6), über den der Frequenzfilter (5) mit dem Stromnetz (7) verbindbar ist.

11. Verfahren zum Erzeugen einer Dreiphasenwechselspannung mit wenigstens einer Gasturbine (2) und wenigstens einem mit der Gasturbine (2) angetriebenen Generator (3),
wobei der angetriebene Generator (3) eine erste Dreiphasenwechselspannung mit einer ersten Frequenz erzeugt, **dadurch gekennzeichnet, dass** die erste Dreiphasenwechselspannung mit der ersten Frequenz in eine zweite Dreiphasenwechselspannung mit einer zweiten Frequenz, die höher als die erste Frequenz ist, umgewandelt wird, und dass in der zweiten Dreiphasenwechselspannung vorhandene Oberschwingungen aus der zweiten Dreiphasenwechselspannung herausgefiltert werden.

12. Verfahren gemäß Anspruch 11,
wobei momentane Ist-Phasenspannungen (U₅₀1, U₅₀2, U₅₀3) der einzelnen Phasen (P₅₀1, P₅₀2, P₅₀3) der ersten Dreiphasenwechselspannung erfasst werden,
wobei in vorgegebenen Zeitabständen die Ist-Phasenspannungen (U₅₀1, U₅₀2, U₅₀3) wahlweise mit jeweils einer vorgegebenen Soll-Phasen-spannung (U₆₀1, U₆₀2, U₆₀3) einer Soll-Dreiphasenwechsel-spannung verglichen werden, und wobei in Abhängigkeit eines Ergebnisses des Vergleichs die Phase (P₅₀1, P₅₀2, P₅₀3) derjenigen Ist-Phasenspannung (U₅₀1, U₅₀2, U₅₀3), die sich am wenigstens von der jeweiligen vorgegebenen Soll-Phasenspannung (U₆₀1, U₆₀2, U₆₀3) unterscheidet, zur Ausbildung einer der jeweiligen vorgegebenen Soll-Phasenspannung (U₆₀1, U₆₀2, U₆₀3) zugeordneten Phasenspannung (u₆₀) der zweiten Dreiphasenwechselspannung verwendet wird.

13. Verfahren gemäß Anspruch 12,
wobei die Soll-Phasenspannungen (U₆₀1, U₆₀2, U₆₀3) mit wenigstens einer Sollwertgebereinheit (16) erzeugt werden oder Phasenspannungen einer Dreiphasenwechselspannung eines Stromnetzes (7) als Soll-Phasenspannungen verwendet wird.

14. Verfahren gemäß Anspruch 13,
wobei die Sollwertgebereinheit (16) mit der Dreiphasenwechselspannung des Stromnetzes (7) synchronisiert wird.
